# Europäisches Patentamt

# European Patent Office

# Office européen des brevets

(11) Publication number : **0 336 469 B1**

(12) # EUROPEAN PATENT SPECIFICATION

(45) Date of publication of patent specification :
03.06.92 Bulletin 92/23

(51) Int. Cl.⁵ : **C08F 2/22,** B01J 19/18,
// C08F12/08

(21) Application number : **89200624.8**

(22) Date of filing : **13.03.89**

(54) Process for polymerization in a packed pulsating column.

(30) Priority : **17.03.88 NL 8800658**

(43) Date of publication of application :
**11.10.89 Bulletin 89/41**

(45) Publication of the grant of the patent :
**03.06.92 Bulletin 92/23**

(84) Designated Contracting States :
**AT BE CH DE ES FR GB IT LI NL SE**

(56) References cited :
**DE-A- 3 346 723**
**NL-A- 295 891**
**CHEMICAL ABSTRACTS, vol. 85, no. 16, 18th**
**October 1976, page 112, abstract no. 110468w,**
**Columbus, Ohio, US**
**IDEM**

(73) Proprietor : **DSM N.V.**
**Het Overloon 1**
**NL-6411 TE Heerlen (NL)**

(72) Inventor : **Hoedemakers, Guillaume**
**Franciscus Maria**
**Pieterstraat 65**
**NL-6166 AP Geleen (NL)**
Inventor : **Thoenes, Dirk**
**Wijngaardplein 39**
**NL-5632 MB Eindhoven (NL)**
Inventor : **Van der Loos, Jozef Lambertus**
**Maria**
**Kribslaan 9**
**NL-6132 BE Sittard (NL)**

EP 0 336 469 B1

Jouve, 18, rue Saint-Denis, 75001 PARIS

## Description

The invention relates to a process for effectuation of a polymerization in a packed column.

Such a process is known from EP-A-0096201. In that patent specification a process is described for effectuation of a polymerization in a high viscosity medium, for instance styrene, using a packed column. The column is divided into three sections, one of the sections, a prepolymerization section, being shut off from the other sections by means of a valve. The valve is not opened until the desired conversion has been reached in the prepolymerization section. The described column thus operates semi-continuously.

The drawback of such a process is that it does not eliminate the drawbacks of a batch process. A batch process for instance shows a wide variety in heat production (or consumption), which makes it very difficult to obtain a constant product quality over a given time period. A second drawback is that the productivity of a batch process is low, because much time is lost on the emptying and filling of a reactor.

The object of the invention is to provide a process for effectuation of a polymerization in a packed column with obviation of the said drawbacks.

The process according to the invention is characterized in that the polymerization is at least partially effectuated as a continous process in a packed column, with continuous or intermittent pulsation during the polymerisation, the dimensionless velocity, H, being obtained by dividing the product of the frequency and the stroke length of the pulsation by the superficial velocity of the reaction phase in the column, being at least 0.1.

Surprisingly, it has been found that employing the process according to the invention it is possible to polymerize monomers continuously, with a constant high product quality. It was also found that no cyclical variations in the polymerization with respect to the conversion occurred and that the use of a pulsating column resulted in strongly reduced fouling of the column. A packed pulsating column is known as such from : A.J.F. Simons, pulsed packed columns, Handbook of Solvent Extraction. ed. Lo, Baird & Hanson, New York, 1982, Wiley & Sons, pp. 343-353. In this article a packed pulsating column is described which is suitable as an extraction column for in particular solid-liquid systems. The article contains no indications concerning effectuation of polymerization reactions in such a column.

It has been found now that emulsion or suspension polymerization reactions can be carried out in a packed pulsating column. Preferably, in such a column emulsion polymerization reactions are carried out for the synthesis of for instance polystyrene, styrene acrylonitrile copolymers, $\alpha$-methylstyrene acrylonitrile copolymers, butadiene homo- and/or copolymers, homo- and/or copolymers of vinyl acetate, isoprene, acrylates and/or methacrylates.

The process is further characterized in that the pulsation can be effected both continuously and intermittently. Preferably, the pulsation is carried out continuously during the polymerization.

Other characteristics and advantages will become apparent from the following specification and examples, with reference to the accompanying drawings. Of these:

Fig. 1 is a cross section of a packed pulsating column for use in the process according to the invention;

Fig. 2 is a cross section of the process rig in which the process according to the invention is carried out; and

Fig. 3 is a graphical representation of results obtained with the process according to the invention.

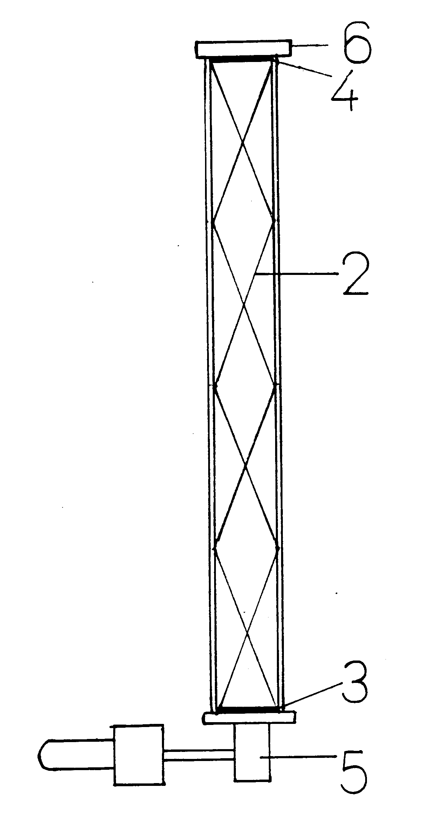

Figure 1 is a representation of a packed pulsating column. The column (1) is provided with packing elements. Known packing bodies (2) such as Raschig rings and Sulzer packings are suitable for this. Examples of this are given in Chem. Ing. Tech., 52, 1980; Perry's Chemical Engineers' Handbook, 4th edition, McGraw-HIll, pp. 18-26, and Chem. Eng. Progress, Nov. 1977, pp. 71-77. The bottom of the column is preferably provided with an element (3) preventing the packing bodies from sinking down. The top of the column is also preferably provided with an element (4) which by means of a pressure element, for instance a spring, is pressed against the packing bodies, as a result of which the movement of these packing bodies, caused by the liquid flow, is suppressed. The element(s) (3) and/or (4) is/are preferably (a) sieve tray(s).

Under the column is a device for generation of vibrations, a pulsator (5), is installed. The pulsator is not limited to this location, however, and can be installed anywhere on the outside of the column if desired. Examples of pulsators that can be used are a pump pulsator, a rotary valve pulsator, a rotary tray pulsator, a pneumatic pressure pulsator or a plunger pump pulsator.

The pulsator causes a reciprocating vertical movement of the reaction liquid flow in the column. If required, a flexible partition wall (6) can be installed between the column and the pulsator, which prevents liquid from penetrating into the pump housing of the pulsator.

The column in figure 1 is preferably provided with a segmented jacket. This permits control of the temperature of the process flow. If desired, any required temperature profile can be applied to the process flow across the column.

In order to prevent a gas-liquid interface in the top of the column, which may give rise to undesired coagu-

EP 0 336 469 B1

lation and flocculation, a flexible partition wall (6), which can move along with the pulsation, may also be installed in the top of the column. This makes it possible to operate the column fully filled with liquid. For the process according to the invention it is important that the reaction liquid hold-up in the column is pulsated.

An important parameter in the use of packed pulsating columns is H, the dimensionless velocity; H is defined as the quotient between the frequency (f) of the pulsation multiplied by the stroke length (s) of the pulsation, and the superficial velocity ($U_o$) of the reaction phase.

$$H = \frac{f.s.}{U_o} \qquad \left[ \frac{s^{-1}.m}{m/s} \right]$$

where:

s (the stroke length) = twice the pulsation amplitude,

$U_o$ = the quotient between the flow rate and the cross-sectional surface area of the column (m/s)

For the process according to the invention it is important that the value of H is between 0.1 and 100, preferably between 1 and 50, more in particular between 4 and 25. Between these values no wall polymerization and/or flocculation occurs. Neither do the cyclical variations in conversion and particle numbers occur, which ensures uniform heat production. This gives a significantly improved and constant product quality.

The conversion of the monomers in the column depends on the chosen conditions such as residence time, temperature and recipe. It is possible to obtain complete conversion in the column. Preferably, however, the polymerization in the column is allowed to proceed to a maximum of 75%. The reaction product leaving the column is subsequently polymerized further in one or more continuously stirred reactors.

The process according to the invention will be further elucidated with the following examples, without being restricted thereto.

Examples

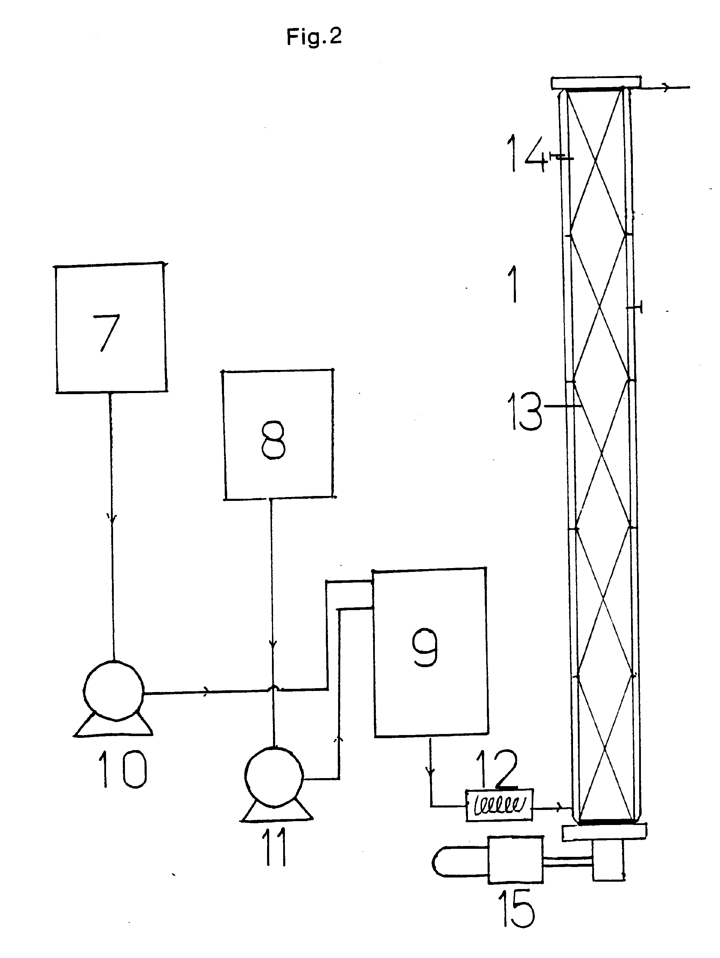

Unless stated otherwise, a process rig as represented in figure 2 was used in the following examples. Into the entire system an inert atmosphere, nitrogen, had been introduced, so that during the operation of the installation the system was completely free from oxygen.

Vessel (7) contained an aqueous solution of soluble components required in the recipe, for instance potassium sulphate, potassium carbonate and/or potassium dresinate 214 (Rosin soap). Further, a reducing agent was added in order to keep the aqueous solution oxygen free. Using a supply pump (10) the aqueous solution was continuously supplied to a pre-mixing vessel (9). Vessel (8) contained the monomer phase, which had previously been made inhibitor free by means of 10 wt.% sodium hydroxide solution. From vessel (8) the monomer phase was continuously supplied to the pre-mixing vessel (9) by means of a supply pump (11). The conditions (temperature and residence time) were chosen so that no polymerization could take place in the pre-mixing vessel. In the pre-mixing vessel the monomer phase was emulsified in the water phase.

From the pre-mixing vessel (9) the emulsion flowed through a heat exchanger (12) before being supplied into the bottom of the column (1). The length of the column was 5 m, comprising 5 segments of one metre in length each. The internal diameter was 0.05 m. The column was made of glass. As packing bodies (13) Raschig rings were used with a length of 10 mm, an external diameter of 9 mm and an internal diameter of 7 m. The Raschig rings were packed randomly in the column.

In each segment of the column a temperature control (14) had been placed to control the temperature of the jacket water of the segment. As pulsation device a plunger pump (15) without valves was used, the stroke length (s) and the frequency (f) allowing of being varied independently of each other. Between the column and the pulsator as well as in the top of the column a flexible partition wall had been installed.

The conversion of the polymerization was determined by evaporation to dryness of the resultant product, after which the conversion was calculated gravimetrically (with correction for the weight of the auxiliary agents added). Of the reaction product leaving the column the weight average particle size ($D_w$) was measured using a Malvern autosizer IIc.

Example I

In the ring according to figure 2 the continuous emulsion polymerization of styrene was carried out.

3

Vessel (7) contained 5.4 l rosin soap (potassium dresinate 214, 15.1 wt.% solids content); 466 g potassium carbonate; 89 g potassium persulphate and 15 g sodium hyposulphite in 20 l water. This solution was continuously supplied to the pre-mixing vessel (9) at a flow rate of 11 l/h.

Styrene was continuously supplied from vessel (8) to the pre-mixing vessel (4) at a flow rate of 5 l/h.

The temperature in the pre-mixing vessel was 20¤C and the residence time was 80 s. By means of the heat exchanger (12) the temperature of the pre-emulsion was brought to 50¤C, being the polymerization temperature applied in the column.

The liquid in the column was pulsated with a frequency of 3.5 s$^{-1}$ and an amplitude a (= s/2) of 3.25 mm. The residence time $\tau$ in the column amounted to 30 minutes. H = 10.1 .

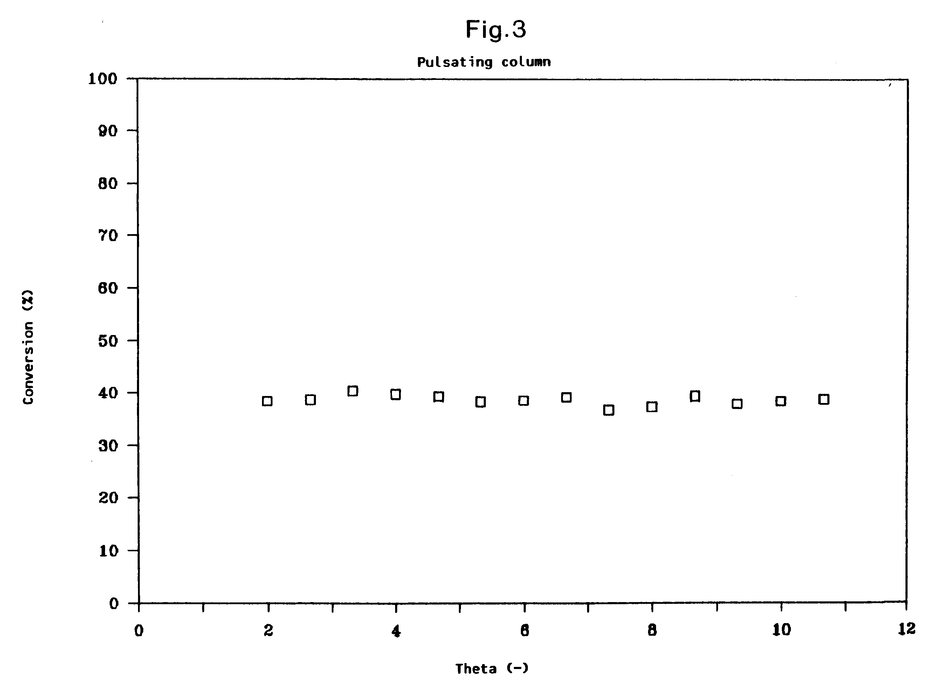

Figure 3 shows the relation between the conversion measured on the end product and the dimensionless experimentation time $\theta$ (= $t/\tau$). From this it appears that throughout the experimentation time $\Theta$ no variation in the conversion occurred.

Table 1 shows the weight average particle size ($D_w$) and the particle number concentration ($N_w$) as a function of the experimentation time. From table 1 it appears quite clearly that $D_w$ remains constant in time, which is a measure for the quality of the end product.

Upon termination of the experiment, no accretion and coagulate were found in the column and the product.

## T A B L E   1

### Continuous experiment in the pulsated column: particle size and particle numbers

| $\theta$ (-) | $D_w$ (nm) | $N_w \times 10^{-14}$ (per g $H_2O$) |
|---|---|---|
| 2.00 | 87.6 | 12 ± 2 |
| 2.67 | 84.9 | 13 ± 2 |
| 3.33 | 87.9 | 12 ± 2 |
| 4.00 | 83.7 | 14 ± 2 |
| 4.67 | 82.2 | 14 ± 2 |
| 5.33 | 82.7 | 14 ± 2 |
| 6.00 | 84.3 | 13 ± 2 |
| 6.67 | 81.8 | 15 ± 2 |
| 7.33 | 86.5 | 12 ± 2 |
| 8.00 | 84.8 | 13 ± 2 |
| 8.67 | 81.9 | 14 ± 2 |
| 9.33 | 86.1 | 12 ± 2 |
| 10.00 | 87.2 | 12 ± 2 |
| 10.67 | 84.3 | 13 ± 2 |
| 11.33 | 84.8 | 13 ± 2 |

Example II

Analogously to example I the continuous emulsion polymerization of styrene was carried out, but the frequency and the amplitude of the pulsation were varied. The reactor fouling of the system was measured in particular.

The results are given in table 2.

T A B L E   2

Variation of pulsation conditions in the pulsated column

| Exp. | T (°C) | a (mm) | f (s⁻¹) | fxa (mm/s) | H | Remarks |
|------|--------|--------|---------|------------|-----|---------|
| 1 | 50 | 6.5 | 3.5 | 22.8 | 20.1 | No accretion (of polymer on wall and column packing) |
| 2 | 50 | 3.25 | 3.5 | 11.4 | 10.1 | No accretion |
| 3 | 50 | 3.25 | 1.75 | 5.7 | 5.0 | Some accretion (small threads of polymer on wall and packing in the entire column) |
| 4 | 50 | 1.63 | 3.5 | 5.7 | 5.0 | Virtually no accretion |
| 5 | 40 | 3.25 | 1.75 | 5.7 | 5.0 | No accretion |
| 6 | 60 | 3.25 | 3.5 | 11.4 | 10.1 | No accretion |
| A | 50 | 0 | 0 | 0 | 0 | Very much accretion already after short θ |

Table 2 shows that if there is no pulsation (comparative example A), considerable fouling of the column was observed after a short time already. Enhancement of the pulsation frequency reduces the fouling tendency.

Example III

Analogously to example I, the continuous emulsion polymerization of styrene was carried out. In a cascade comprising three continuously stirred tank reactors (CSTR'S) with a capacity of 2.4 l per reactor, the reaction product from the column was polymerized further with a flow rate of 1.2 l/h at a temperature of 50¤C. The CSTR'S were stirred such that the emulsion remained stable and of homogeneous composition throughout the experiment.

In table 3 are given the conversion, the weight average particle size ($D_w$) and the particle number concentration $N_w$ for each of the three CSTR'S.

## T A B L E 3

### Particle number and conversion data of an experiment with three CSTR's (stationary situation)

|  | Conversion (%) | $D_w$ (nm) | $N_w \times 10^{-14}$ (per g $H_2O$) |
|---|---|---|---|
| Supply CSTR's | 38.0 | 84.5 | 13 ± 2 |
| CSTR 1 | 82.1 | 85.9 | 12 ± 2 |
| CSTR 2 | 92.3 | 83.2 | 14 ± 2 |
| CSTR 3 | 96.6 | 86.8 | 12 ± 2 |

From the table it appears that the reaction product from the column can be polymerized out to a conversion higher than 95% and that no new particles were formed in the CSTR'S.

Example IV

Analogously to example I the continuous emulsion polymerization of styrene was carried out. Vessel (7) contained however 264 g sodiumlaurylsulphate, 60 g sodium persulphate and 0.7 g sodium hydroxide in 20 l water. This solution was continuously supplied to the pre-mixing vessel (9) at a flow rate of 6.53 l/h.
Styrene was continuously supplied from vessel (8) to the pre-mixing vessel (4) at a flow rate of 2.7 l/h.
Temperature in the pre-mixing vessel was 10¤C and the residence time was 139 s. The temperature of the pre-emulsion was brought up to 50¤C, being the polymerization temperature applied in the column.
The liquid in the column was pulsated with a frequency of 3.5 s$^{-1}$ and an amplitude a (= s/z) of 3.25 mm. The residence time in the column amounted 52 minutes. H = 34.08.
It appeared that throughout the experimentation time no variation in the conversion occurred (average: 80%).
Table 4 shows the weight average particle size and the particle number concentration as a function of the experimentation time.
Upon termination of the experiment, no accretion and coagulate were found in the column and the product.

T A B L E   4

Continuous experiment in the pulsated column:

| θ | Dw (nm) | Nw x $10^{-14}$ (per g $H_2O$) |
|---|---|---|
| 1.5 | 86.6 | 14 ± 2 |
| 2 | 81.5 | 13 ± 2 |
| 2.5 | 83.6 | 13 ± 2 |
| 3 | 84.6 | 15 ± 2 |
| 4 | 80.2 | 12 ± 2 |
| 5 | 86.0 | 12 ± 2 |
| 6 | 86.6 | 13 ± 2 |
| 7 | 84.8 | 14 ± 2 |
| 8 | 81.3 | 13 ± 2 |
| 9 | 83.5 | 13 ± 2 |
| 10 | 84.4 | 12 ± 2 |
| 11 | 86.2 | 13 ± 2 |

Example V

Analogously to example I a continuous emulsion polymerization was carried out, instead of styrene however vinylacetate was polymerized. Vessel (7) contained 115 g sodiumlaurylsulphate, 95 g sodium persulphate and 50 g sodiumbicarbonate in 20 l water. This solution was continuously supplied to the pre-mixing vessel (9) at a flow rate of 11.6 l/h.

Vinylacetate was continuously supplied from vessel (8) to the premixing vessel (4) at a flow rate of 4.4 l/h.

Temperature in the pre-mixing vessel was 10°C and the residence time was 80 s. The temperature of the pre-emulsion was brought up to 50¤C, being the polymerization temperature applied in the column.

The liquid in the column was pulsated with a frequency of 3.5 $s^{-1}$ and an amplitude a (= s/z) of 3.25 mm. The residence time in the column amounted 30 minutes. H = 20.2.

It appeared that throughout the experimentation time no variation in the conversion occurred (average: 72%).

Table 5 shows the weight average particle size and the particle number concentration as a function of the experimentation time.

Upon termination of the experiment, no accretion and coagulate were found in the column and the product.

T A B L E    5

Continuous experiment in the pulsated column:

| $\theta$ | Dw (nm) | Nw x $10^{-14}$ (per g $H_2O$) |
| --- | --- | --- |
| 5 | 131.1 | 2.9 ± 0.3 |
| 6 | 130.5 | 2.9 ± 0.3 |
| 7 | 126.9 | 3.2 ± 0.3 |
| 8 | 128.8 | 3.1 ± 0.3 |
| 9 | 124.6 | 3.4 ± 0.3 |
| 10 | 131.1 | 2.9 ± 0.3 |
| 11 | 127.4 | 3.2 ± 0.3 |
| 12 | 125.2 | 3.3 ± 0.3 |
| 13 | 124.7 | 3.1 ± 0.3 |
| 14 | 128.5 | 3.1 ± 0.3 |
| 15 | 127.9 | 3.1 ± 0.3 |

Example VI

Analogously to example IV the continuous polymerization of styrene was carried out. However instead of Raschig rings, stainless steel Sulzer$^R$ SMV8-DN50 were packed randomly in the column.

The liquid in the columns was pulsated with a frequency of 3.5 $s^{-1}$ and an amplitude a of 4.2 mm. The residence time in the column amounted 71 minutes. H = 25.2.

It appeared that throughout the experimentation time no variation in conversion occured (average: 89%).

Table 6 shows the weight average particle size and the particle number concentration as a function of the experimentation time.

Upon termination of the experiment, no accretion and coagulate were found in the column and the product.

T A B L E   6

| $\theta$ | Dw (nm) | $Mw \times 10^{-14}$ (per g $H_2O$) |
|---|---|---|
| 1.5 | 84.0 | 13 ± 2 |
| 2 | 84.7 | 13 ± 2 |
| 2.5 | 81.7 | 14 ± 2 |
| 3 | 85.7 | 12 ± 2 |
| 4 | 82.4 | 14 ± 2 |
| 5 | 81.1 | 14 ± 2 |
| 6 | 79.3 | 15 ± 2 |
| 7 | 85.0 | 13 ± 2 |
| 8 | 84.3 | 13 ± 2 |
| 9 | 82.5 | 14 ± 2 |
| 10 | 83.7 | 13 ± 2 |
| 11 | 84.3 | 13 ± 2 |

## Claims

1. Process for effectuation of a polymerization in a packed column, characterized in that the polymerization is at least partially effectuated as a continuous process in a packed column, with continuous or intermittent pulsation during the polymerisation, the dimensionless velocity, H, being obtained by dividing the product of the frequency and the stroke length of the pulsation by the superficial velocity of the reaction phase in the column, being at least 0.1.

2. Process according to claim 1, characterized in that the pulsation in the column is continuous.

3. Process according to any one of the claims 1-2, characterized in that the dimensionless velocity H in the pulsating column is between 0.1 and 100.

4. Process according to any one of the claims 1-3, characterized in that the dimensionless velocity H is between 1 and 50.

5. Process according to any one of the claims 1-4, characterized in that the polymerization is a continuous emulsion polymerization.

## Patentansprüche

1. Verfahren zum Durchführen einer Polymerisation in einer Füllkörperkolonne, dadurch gekennzeichnet, daß die Polymerisation zumindest teilweise als kontinuierliches Verfahren in einer Füllkörperkolonne mit kontinuierlicher oder intermittierender Pulsation während der Polymerisation durchgeführt wird, wobei die dimensionsfreie Geschwindigkeit H, die durch Dividieren des Produktes der Frequenz und der Hublänge der Pulsation durch die Oberflächengeschwindigkeit der Reaktionsphase in der Kolonne erhalten wird, mindestens 0,1 ist.

2. Verfahren nach Anspruch 1, dadurch gekennzeichnet, daß die Pulsation in der Kolonne kontinuierlich ist.

3. Verfahren nach einem der Ansprüche 1 bis 2, dadurch gekennzeichnet, daß die dimensionsfreie Geschwindigkeit H in der pulsierend arbeitenden Kolonne 0,1 bis 100 ist.

4. Verfahren nach einem der Ansprüche 1 bis 3, dadurch gekennzeichnet, daß die dimensionsfreie Geschwindigkeit H 1 bis 50 ist.

5. Verfahren nach einem der Ansprüche 1 bis 4, dadurch gekennzeichnet, daß die Polymerisation eine kontinuierliche Emulsionspolymerisation ist.

## Revendications

1. Procédé pour effectuer une polymérisation dans une colonne garnie, caractérisé en ce que : la polymérisation est au moins partiellement effectuée sous forme d'un procédé continu dans une colonne à garnissage, avec pulsation continue ou intermittente pendant la polymérisation, la vitesse non dimensionnelle, H, étant obtenue en divisant le produit de la fréquence et de la longueur de course de la pulsation par la vitesse superficielle de la phase de réaction dans la colonne, est d'au moins 0,1.

2. Procédé selon la revendication 1, caractérisé en ce que la pulsation dans la colonne est continue.

3. Procédé selon la revendication 1 ou 2, caractérisé en ce que la vitesse non dimensionnelle H dans la colonne de pulsation est comprise entre 0,1 et 100.

4. Procédé selon l'une quelconque des revendications 1 à 3, caractérisé en ce que la vitesse non dimensionnelle H est comprise entre 1 et 50.

5. Procédé selon l'une quelconque des revendications 1 à 4, caractérisé en ce que la polymérisation est une polymérisation en émulsion continue.

# Fig.1

Pulsating column

## Fig.2

Fig.3
Pulsating column